# FASCICULE DE BREVET EUROPEEN

(11) **EP 4 222 126 B1**
(45) Date de publication et mention de la délivrance du brevet: **31.07.2024**
(21) Numéro de dépôt: 21778121.0
(22) Date de dépôt: 20.09.2021
(51) Int. Cl.: C03C 17/36, C03C 17/40

(54) **VITRAGE CHAUFFANT À CONTRÔLE SOLAIRE TRANSPARENT AUX RADIOFRÉQUENCES**
HOCHFREQUENZTRANSPARENTE SOLARSTEUERNDE HEIZVERGLASUNG
RADIOFREQUENCY-TRANSPARENT SOLAR-CONTROL HEATING GLAZING

(30) Priorité: 29.09.2020 FR 2009899
(43) Date de publication de la demande: 09.08.2023
(73) Titulaire: Saint-Gobain Glass France, 92400 Courbevoie (FR)
(72) Inventeur: MIMOUN, Emmanuel, 92100 BOULOGNE-BILLANCOURT (FR); COSTANTINI, Daniele, 75005 PARIS (FR); FRANCOIS, Guillaume, 52064 AACHEN (DE)
(74) Mandataire: Saint-Gobain Recherche
(86) Numéro de dépôt international: PCT/EP2021/075750
(87) Numéro de publication internationale: WO 2022/069270

(56) Documents cités:
- EP-A1- 1 442 497
- EP-A1- 1 614 325
- WO-A1-2017/064054

## Description

### Domaine technique

L'invention se rapporte à un vitrage chauffant à contrôle solaire transparent aux radiofréquences. Utilisé dans un véhicule ou dans un bâtiment, il permet d'assurer à la fois un certain niveau de confort thermique dans l'habitacle du véhicule ou à l'intérieur du bâtiment, une transmission accrue des ondes électromagnétiques émises et/ou reçues par des dispositifs de télécommunication utilisés dans cet habitacle ou ce bâtiment, et un chauffage efficace pour le dégivrage et/ou le désembuage du vitrage, notamment avec une alimentation électrique basse tension.

### Arrière-plan technique

Afin de satisfaire le besoin croissant des personnes en éclairage par lumière naturelle, les véhicules de transport, aussi bien que les bâtiments, sont toujours davantage équipés de surfaces vitrées au point qu'elles peuvent constituer parfois la majorité de leurs surfaces externes.

Dans des applications bâtiments et/ou automobile, ces surfaces vitrées sont généralement fonctionnalisées afin d'agir sur les rayonnements solaires et/ou infrarouges incidents et ainsi réduire les pertes thermiques et/ou les phénomènes d'effet de serre. Cette fonctionnalisation est couramment obtenue par un dépôt d'empilements de couches comprenant des couches fonctionnelles métalliques qui confèrent des fonctions dites « sélectives », également appelées « fonctions de contrôle solaire », permettant de diminuer efficacement la quantité d'énergie transmise au travers du vitrage vers l'intérieur sans préjudice pour la transmission lumineuse dans le spectre visible. Généralement, ces empilements comprennent aussi des couches diélectriques capables de compenser les effets optiques des couches fonctionnelles métalliques afin de rendre le vitrage optiquement transparent dans le visible.

Toutefois, les couches métalliques fonctionnelles que comprennent ces empilements peuvent constituer des obstacles à l'intégration de fonctions supplémentaires, notamment des fonctions de transparence aux radiofréquences. En effet, en raison de leur nature métallique, elles agissent comme des miroirs qui réfléchissent les ondes électromagnétiques radio, notamment les radiofréquences, et donc bloquent leur transmission des au travers de la surface vitrée. Le signal radio émis ou détecté par les dispositifs de télécommunication (téléphone cellulaire, émetteurs Wifi ou Bluetooth, puces GPS...) est alors affaibli. Les télécommunications deviennent de médiocre qualité, et parfois impossibles.

A titre d'exemple, selon l'article de Rodriguez et al., "Radio Propagation into Modem Buildings: Atténuation Measurements in the Range from 800 MHz to 18 GHz," 2014 IEEE 80th Vehicular Technology Conférence (VTC2014-Fall), 2014, pp. 1-5, un vitrage qui comprend un empilement de couches comprenant des couches fonctionnelles métalliques peut provoquer une atténuation de plus de 30dB des signaux de télécommunication. Autre exemple, selon l'article de Karttunen et al., "Investigation of 5G Radio Frequency Signal Losses of glazing Structures," GPD Glass Performance Days 2019, un empilement de couches comprenant deux couches fonctionnelles métalliques dans un double vitrage bâtiment provoque une atténuation d'environ 60 dB, et jusqu'à 100 dB avec trois couches fonctionnelles métalliques.

Cette atténuation des ondes électromagnétiques radio est préjudiciable à l'utilisation de dispositifs de télécommunication à l'intérieur des véhicules, notamment des véhicules électriques, et des bâtiments connectés. Il est alors courant d'adapter l'empilement de manière à former sur tout ou partie de la surface de l'empilement une surface sélective en fréquence qui confère une fonction de transparence aux radiofréquences.

Par exemple, EP 0990278 A1, EP 1652266 A2, WO 03036758 A1, WO 2004093497 A1, EP0726232A2 décrivent des vitrages, en particulier des parebrises, à contrôle solaire transparents aux radiofréquences dans lesquels au moins une portion de l'empilement, en particulier la portion de l'empilement la plus exposée aux signaux de télécommunication, est disposée selon un motif périodique de manière à former une surface sélective en fréquence. Selon le motif périodique utilisé, cette surface sélective en fréquence peut agir comme un filtre passe-bas, passe-haut ou passe-bande aux radiofréquences.

Pour certaines applications, outre les fonctions de contrôle solaire et de transparence aux radiofréquences, le vitrage doit comprendre une fonction de chauffage afin de permettre, par exemple, son dégivrage et/ou son désembuage.

En particulier dans le domaine automobile, dans lequel les vitrages sont mis en oeuvre sous forme de parebrises, vitres custodes, fenestrons, lunettes et/ou toits vitrés, cette fonction de chauffage est généralement assurée par l'empilement à fonctions de contrôle solaire. Grâce notamment aux couches métalliques qu'il contient, l'empilement est un conducteur électrique et, lorsqu'il alimenté en électricité par l'alternateur et/ou la batterie du véhicule, il peut dégager de la chaleur par effet Joule.

Pour des raisons évidentes de sécurité, les alternateurs et/ou les batteries de véhicules délivrent généralement une faible tension électrique à leurs bornes, typiquement entre 12V et 48V, souvent autour de 14V. Aussi, afin que la quantité de chaleur dégagée soit suffisante pour un désembuage et/ou un dégivrage efficace, la résistivité surfacique de l'empilement doit être suffisamment faible pour accentuer l'effet Joule à basse tension.

EP 0726232 A2, EP 1614325 A1 et US 2015229030A1 décrivent des exemples de parebrises chauffants à contrôle solaire transparents aux radiofréquences, dans lesquels un empilement conducteur électrique apporte simultanément des fonctions contrôles solaire et de chauffage, et une portion de l'empilement est disposée selon un motif périodique de manière à former une surface sélective en fréquence, transparente aux radiofréquences.

### Résumé de l'invention

### Problème technique

Les vitrages chauffants à contrôle solaire transparents aux radiofréquences de l'état de la technique ont pour inconvénient majeur de nécessiter des empilements de contrôle solaire présentant une conductivité électrique élevée, c'est-à-dire une résistance électrique de surface faible, de manière à ce la quantité de chaleur dégagée par effet Joule à partir de faibles tensions électriques d'alimentation, en particulier à partir des faibles tensions des alternateurs et/ou les batteries de véhicules, soit suffisante pour un désembuage et/ou un dégivrage efficace.

Il n'est donc souvent pas possible d'utiliser, dans ces vitrages, des empilements qui sont parfois déjà disponibles dans l'état de la technique, et présentent des fonctions efficaces de contrôle solaire. Leur résistivité électrique de surface, étant trop élevée, ne permet pas d'obtenir par effet Joule les quantités de chaleur nécessaires au désembuage et/ou dégivrage. Afin d'obtenir la conductivité électrique requise, les empilements doivent donc être adaptés et incorporer davantage de couches métalliques et/ou des couches métalliques plus épaisses, souvent plus qu'il en est nécessaire pour les fonctions de contrôle solaire.

Or, l'ajout de couches métalliques et/ou l'épaississement des couches existantes diminuent la transparence aux radiofréquences, même dans la portion ayant une surface sélective en fréquence, et nécessitent l'ajout et/ou la modification de couches diélectriques afin de compenser et/ou neutraliser les effets optiques engendrés par ces couches métalliques fonctionnelles.

D'autre part, la liberté dans le choix du motif périodique utilisé pour former une surface sélective en fréquence peut être considérablement réduite par la conductivité électrique de l'empilement. En effet, étant donné qu'il est nécessaire de conserver un niveau de conductivité élevée dans l'empilement, les motifs périodiques utilisés pour former une surface sélective en fréquence ne doivent pas induire une augmentation de sa résistivité électrique de surface. Ainsi, certains motifs périodiques peuvent être peu, ou ne pas être, adaptés alors qu'ils présentent une transparence intéressante pour certaines radiofréquences.

La conception et le dépôt des empilements de couches dans les vitrages de l'état de la technique peuvent donc devenir particulièrement complexes, et accroitre considérablement les coûts de développement et de fabrication.

### Solution au problème technique

La présente invention résout ces problèmes en fournissant une solution alternative aux vitrages chauffants à contrôle solaire transparents aux radiofréquences de l'état de la technique. Elle a pour objet un vitrage tel que décrit dans la revendication 1, les revendications dépendantes étant des modes de réalisation avantageux.

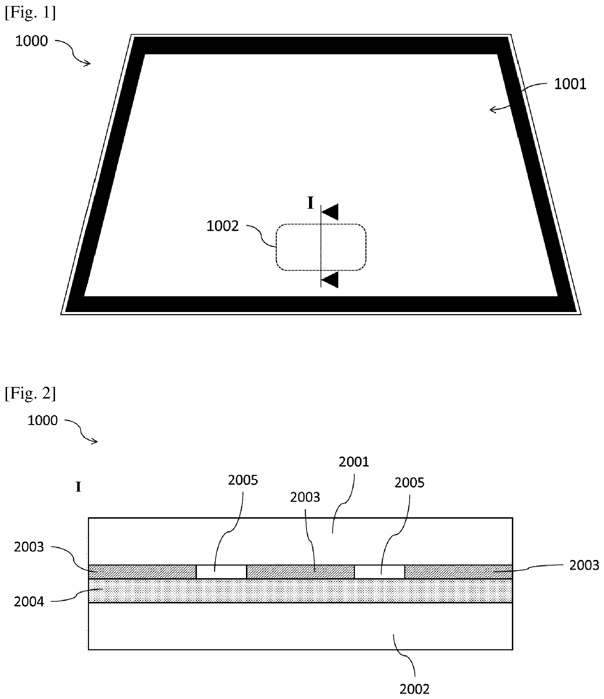

En référence aux figures 2 à 6, l'invention se rapporte à un vitrage 3000, 4000, 5000, 6000 comprenant :
- une feuille 3001 de verre minéral transparent comprenant au moins une surface 3001a principale ;
- un empilement 3002 de couches superposé à ladite surface 3001a principale de ladite feuille 3001 de verre minéral transparent, ledit empilement 3002 de couches comprenant au moins une couche fonctionnelle métallique, et au moins une portion 3004a dudit empilement 3002 de couches étant disposée selon un motif périodique de manière à former une surface sélective en fréquence ;
   le vitrage 3000, 4000, 5000, 6000 est caractérisé en ce qu'il comprend en outre :
- un treillis 3003 métallique maillé conducteur électrique avec une résistivité électrique de surface plus faible que celle de l'empilement 3002 de couches,
- ledit treillis 3003 étant superposé audit empilement 3002 de couches de manière à ce que, dans la portion 3004a de l'empilement disposée selon le motif périodique, le maillage dudit treillis 3003 ne recouvre pas les zones 3005 dudit motif périodique dépourvues de l'empilement 3002 de couches.

Au sens de l'invention, il est entendu par « treillis métallique » un entrecroisement de fils métalliques, notamment des fils métalliques minces ou plats, dans une ou plusieurs directions du plan du treillis, tel que, par exemple, une grille à ligne, une grille à carrées, ou une grille à nid d'abeille, et de manière générale toute grille selon un motif adapté.

La superposition du treillis 3003 sur l'empilement 3002 de manière à ce que, dans la portion 3004a de l'empilement 3002 disposée selon le motif périodique, le maillage dudit treillis 3003 ne recouvre pas les zones dudit motif périodique dépourvues d'empilement 3002 de couches, est une caractéristique essentielle de l'invention. Dans cette portion 3004a, il est important que le treillis 3003 ne soit jamais présent dans une zone 3005 dépourvue d'empilement, et qu'il soit continu dans au moins une direction du plan de l'empilement.

Dans le contexte de l'invention, le terme « superposer » et ses dérivés ne doivent pas être interprétés de manière restrictive en ce que les objets superposés soient nécessairement en contact et/ou dans une position particulière relative l'une à l'autre. Ils doivent être interprétés comme signifiant placer ou disposer des choses l'une sur l'autre, lesdites choses pouvant être en contact ou non l'une avec l'autre, l'une pouvant être au-dessus ou en-dessous de l'autre.

En particulier, le treillis 3002 métallique maillé peut être en contact ou non avec l'empilement 3002 sur lequel il est superposé, placé en-dessous ou au-dessus. De même, l'empilement 3002 de couches peut être en contact ou non avec la surface 3001a principale de ladite feuille 3001 de verre minéral transparent. Il peut également être disposé sur un autre élément du vitrage, tel qu'un intercalaire de feuilletage dans le cas d'un virage feuilleté, conformément à certains modes de réalisation de l'invention.

Le terme « recouvrir » et ses dérivés ne doivent pas être interprétés de manière restrictive en ce que l'objet qui recouvre soit nécessairement en contact avec l'objet qu'il recouvre, qu'il le recouvre totalement, et/ou qu'il soit dans une position particulière relative par rapport à lui. En revanche, l'expression « ne recouvre pas » doit être interprétée comme « ne recouvrant pas complètement ».

### Avantages de l'invention

Un avantage de l'invention est que la quantité de chaleur dégagée par effet Joule à partir de faibles tensions électriques d'alimentation, en particulier à partir des faibles tensions des alternateurs et/ou les batteries de véhicules, est plus importante que celle des vitrages de l'état de la technique. Elle permet donc un désembuage et/ou un dégivrage plus efficace et plus rapide.

D'autre part, l'invention permet d'utiliser des empilements « contrôle solaire », c'est-à-dire comprenant au moins une couche fonctionnelle métallique, plus résistif que ceux utilisés dans les vitrages de l'état de la technique. Le risque de diminution de la transparence aux radiofréquences et le besoin de compensation et/ou neutralisation des effets optiques des couches métalliques fonctionnelles sont donc réduits. A fonctions équivalents ou supérieures, des empilements moins complexes peuvent être utilisés. Les coûts de développement et de fabrication sont réduits.

Un autre avantage de l'invention est qu'elle fournit davantage de liberté dans le choix des motifs périodiques de la surface sélective en fréquence. La conduction électrique, et donc l'émission de chaleur pour la fonction de chauffage, est majoritairement assurée par le treillis métallique maillé. La fonction de transparence aux radiofréquences n'est donc plus contrainte, sinon beaucoup moins, par la nécessité de conserver un niveau de conductivité élevée dans l'empilement à l'aide d'un motif périodique induisant une faible résistivité de surface de l'empilement.

### Brève description des dessins

[Fig.1] est une représentation schématique d'un vitrage chauffant à contrôle solaire transparents aux radiofréquences selon l'état de la technique.
[Fig.2] est une représentation schématique en coupe de la zone I du vitrage de la [Fig.1].
[Fig.3] est une représentation schématique d'un vitrage selon un premier mode de réalisation de l'invention.
[Fig.4] est une représentation schématique d'un vitrage selon un deuxième mode de réalisation de l'invention.
[Fig.5] est une représentation schématique d'un vitrage selon un troisième mode de réalisation de l'invention.
[Fig.6] est une représentation schématique d'un vitrage selon un quatrième mode de réalisation de l'invention.
[Fig.7] est une représentation schématique, en vue de dessus, de la superposition du maillage du treillis métallique maillé conducteur électrique et de l'empilement de couches selon un premier mode de réalisation.
[Fig.8] est une représentation schématique, en vue de dessus, de la superposition du maillage du treillis métallique maillé conducteur électrique et de l'empilement de couches selon un deuxième mode de réalisation.
[Fig.9] est une représentation schématique, en vue de dessus, de la superposition du maillage du treillis métallique maillé conducteur électrique et de l'empilement de couches selon un troisième mode de réalisation.
[Fig. 10] est une représentation schématique d'une variante du motif périodique de la [Fig.9].

### Description détaillée de modes de réalisation

Un vitrage chauffant à contrôle solaire transparent aux radiofréquences selon l'état de la technique est schématiquement représenté sur la [Fig.1]. Le vitrage 1000, en l'occurrence un vitrage feuilleté tel qu'un parebrise pour véhicule, comprend, sur sa surface principale 1001, une portion 1002 dont la surface est une surface sélective en fréquence qui confère une fonction de transparence aux radiofréquences.

La [Fig.2] est une vue en coupe de la portion 1002 du vitrage 1000. Le vitrage 1000 comprend une première feuille 2001 de verre minéral transparent et une deuxième feuille 2002 de verre minéral transparent qui sont liées entre elles à l'aide d'un intercalaire 2004 de feuilletage avec lequel elles sont en contact adhésif. La première feuille 2001 de verre comprend, sur sa surface en contact avec l'intercalaire 2004 de feuilletage, un empilement 2003 de couches comprenant une ou plusieurs couches métalliques fonctionnelles, en général au moins trois couches fonctionnelles métalliques, souvent à base d'argent, qui confèrent une fonction de contrôle solaire au vitrage 1000.

La fonction de chauffage par effet Joule est également assurée par l'empilement 2003 qui, en raison des couches fonctionnelles métalliques qu'il contient, est un conducteur électrique. L'alimentation électrique est généralement assurée par un ou plusieurs jeux de barres conductrices électriques (non représentées sur la figure), souvent placées en périphérie du vitrage, et sur lesquelles l'empilement de couches est électriquement connecté.

La transparence aux radiofréquences de la portion 1002 est assurée par une disposition de l'empilement 2003 selon un motif périodique de manière à former, dans ladite portion 1002, un empilement périodiquement discontinu. Cette discontinuité périodique est obtenue grâce notamment à des zones 2005 de la surface de la première feuille 2001 de verre minérale qui sont dépourvues de l'empilement 2003, ou au moins de la partie de l'empilement 2003 comprenant la ou les couches fonctionnelles métalliques. De nombreux motifs périodiques permettent d'obtenir une surface sélective en fréquence. Ils sont parfaitement connus de l'état de la technique. Leur choix est cependant conditionné par la nécessité de conserver une conductivité électrique élevée dans l'empilement de couches. Le motif périodique choisi doit avoir un effet réduit sur cette conductivité électrique.

L'empilement 2003 « contrôle solaire » est généralement un empilement complexe en ce qu'il doit avoir :
- une conductivité électrique élevée afin que la quantité de chaleur dégagée par effet Joule à partir de faibles tensions électriques d'alimentation soit suffisante pour des fonctions de désembuage et/ou dégivrage,
- un effet réduit sur la transmission des radiofréquences, notamment dans la portion ayant une surface sélective en fréquence, et
- une apparence visuelle acceptable, notamment par compensation / neutralisation des effets optiques engendrés par ces couches métalliques fonctionnelles.

L'invention fournit une alternative permettant de réduire le nombre de spécifications pour l'empilement « contrôle solaire » avec de meilleures performances de chauffage.

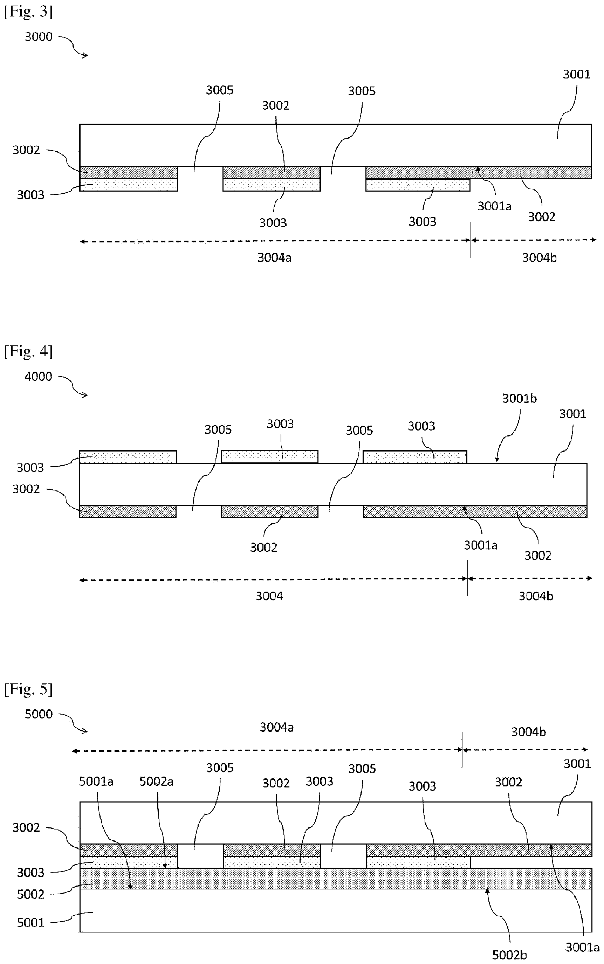

Selon un premier mode de réalisation, illustré sur la [Fig.3], l'invention concerne un vitrage 3000 comprenant :
- une feuille 3001 de verre minéral transparent comprenant au moins une surface principale 3001a ;
   un empilement 3002 de couches superposé à ladite surface principale 3001a de ladite feuille 3001 de verre minéral transparent, ledit empilement 3002 de couches comprenant au moins une couche fonctionnelle métallique, et au moins une portion 3004a dudit empilement 3002 de couches étant disposée selon un motif périodique de manière à former une surface sélective en fréquence ;
- un treillis 3003 métallique maillé conducteur électrique avec une résistivité électrique de surface plus faible que celle de l'empilement 3002 de couches, ledit treillis 3003 étant disposé au contact de l'empilement 3002 de couches, et superposé audit empilement 3002 de couches de manière à ce que, dans la portion de l'empilement 3002 de couches disposée selon le motif périodique, le maillage dudit treillis 3003 ne recouvre pas les zones 3005 dudit motif périodique dépourvues d'empilement 3002 de couches.

Selon un deuxième mode de réalisation, illustré sur la [Fig.4], l'invention concerne un vitrage 4000 comprenant :
- une feuille 3001 de verre minéral transparent comprenant au moins une surface principale 3001a ;
   un empilement 3002 de couches superposé à ladite surface principale 3001a de ladite feuille 3001 de verre minéral transparent, ledit empilement 3002 de couches comprenant au moins une couche fonctionnelle métallique, et au moins une portion 3004a dudit empilement 3002 de couches étant disposée selon un motif périodique de manière à former une surface sélective en fréquence ;
- un treillis 3003 métallique maillé conducteur électrique avec une résistivité électrique de surface plus faible que celle de l'empilement 3002 de couches, ledit treillis 3003 métallique est disposé sur une surface principale 3001b de la feuille 3001 de verre minéral transparent opposée à la surface principale 3001a sur laquelle est disposé l'empilement 3002 de couches, et superposé audit empilement 3002 de couches de manière à ce que, dans la portion de l'empilement disposée selon le motif périodique, le maillage dudit treillis 3003 ne recouvre pas les zones 3005 dudit motif périodique dépourvues d'empilement 3002 de couches.

Dans les premier et deuxième modes de réalisation, l'empilement 3002 de couches peut être disposé sur la surface principale 3001a de la feuille 3001 de verre minéral transparent, notamment en contact de cette surface.

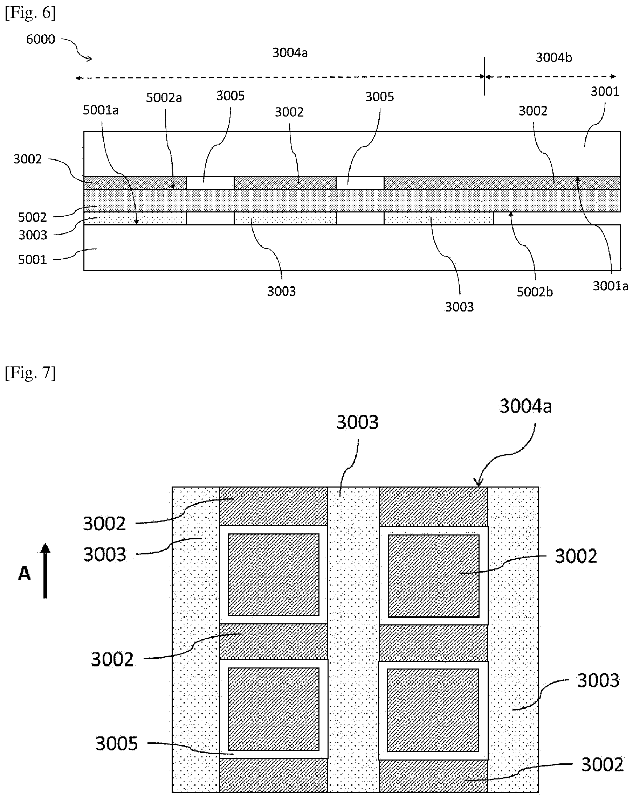

Selon un troisième et un quatrième mode de réalisation, respectivement illustrés sur les [Fig.5] et [Fig.6], l'invention concerne un vitrage 5000, 6000, en particulier un vitrage feuilleté, comprenant :
- une feuille 3001 de verre minéral transparent comprenant au moins une surface principale 3001a ;
   un empilement 3002 de couches superposé à ladite surface principale 3001a de ladite feuille 3001 de verre minéral transparent, ledit empilement 3002 de couches comprenant au moins une couche fonctionnelle métallique, et au moins une portion 3004a dudit empilement 3002 de couches étant disposée selon un motif périodique de manière à former une surface sélective en fréquence ;
- un treillis 3003 métallique maillé conducteur électrique avec une résistivité électrique de surface plus faible que celle de l'empilement 3002 de couches, ledit treillis 3003 métallique est de manière à ce que, dans la portion de l'empilement 3002 disposée selon le motif périodique, le maillage dudit treillis 3003 ne recouvre pas les zones 3005 dudit motif périodique dépourvues d'empilement 3002 de couches ;
- une deuxième feuille 5001 de verre minéral transparent comprenant au moins une surface principale 5001a et,
- un intercalaire 5002 de feuilletage, tel qu'un intercalaire à base de PVB et/ou PET, comprenant une première surface principale 5002a et une deuxième surface 5002b principale, lesdites première et deuxième surfaces principales, 5002a et 5002b de l'intercalaire 5002 de feuilletage étant respectivement en contact adhésif avec la surface principale 5001a de la deuxième feuille 5001 de verre minéral transparent et la surface principale 3001a de la première feuille 3001 de verre minéral transparent sur laquelle est disposé l'empilement 3002 de couches,
et tel que le treillis 3003 métallique maillé conducteur électrique est disposé sur l'une des deux surfaces principales, 5002a, 5002b de l'intercalaire 5002 de feuilletage.

Selon des variantes des troisième et quatrième modes de réalisation, le vitrage feuilleté peut comprendre d'autres intercalaire de feuilletages disposés entre les deux 3001, 5001 feuilles de verre minéral transparent. En particulier, il peut comprendre deux intercalaires de feuilletages, par exemple, un premier intercalaire de feuilletage à base de PVB et un deuxième intercalaire de feuilletage à base de PET, en contact adhésif l'un avec l'autre. Il peut aussi comprendre trois intercalaires de feuilletage en contact adhésif les uns avec les autres, par exemple deux intercalaires de feuilletage à base de PVB entre lesquels est interposé un intercalaire de feuilletage à base de PET.

Dans les troisième et quatrième modes de réalisation et leurs variantes, l'empilement 3002 de couches peut être disposé, notamment en contact, sur la surface principale de l'une ou l'autre feuille de verre minéral transparent en contact avec l'intercalaire de feuilletage, ou disposé, notamment en contact, sur l'une quelconque des surfaces principales de ou des intercalaires de feuilletages.

Dans tous les modes de réalisation, la disposition de l'empilement 3002 de couches selon un motif périodique de manière à obtenir une surface sélective en fréquence est un des aspects de la présente invention. Cependant, les motifs périodiques adaptés ne sont pas décrits en détail dans le cadre de la présente invention. Ces motifs étant connus de l'état de la technique, l'homme du métier peut aisément trouver les informations complémentaires pour le mise en oeuvre de cet aspect en consultant la documentation y afférant.

Il convient de souligner à nouveau qu'un des avantages de l'invention est de permettre une plus grande liberté de choix quant aux motifs périodiques. Il est ainsi possible de sélectionner des motifs périodiques permettant de former des surfaces sélectives en fréquence intéressantes pour certaines radiofréquences qui ne peuvent pas être utilisés dans les vitrages de l'état de la technique.

Selon le motif périodique utilisé, la surface sélective en fréquence peut agir comme un filtre passe-bas, passe-haut ou passe-bande aux radiofréquences. Dans des modes avantageux de réalisation de l'invention, en particulier pour des applications dans lesquelles des dispositifs courants de télécommunication (téléphone cellulaire, émetteurs Wifi ou Bluetooth, puces GPS...) sont utilisés, la surface sélective en fréquence forme un filtre passe-bande en radiofréquences, en particulier un filtre passe-bande en radiofréquences dont la borne inférieure de l'intervalle est supérieure à 0 et la borne supérieure de l'intervalle est d'au moins 3 GHz, en particulier d'au moins 5 GHz.

Dans tous les modes de réalisation, l'empilement 3002 de couches comprend au moins une couche fonctionnelle métallique, permettant de conférer des fonctions de « contrôle solaire ». En particulier, ce type d'empilement de couches comprend au moins deux, en particulier au moins trois couches fonctionnelles métalliques, de préférence à base d'argent, séparées entre elles par au moins un ensemble diélectrique de couches. Ces empilements sont parfaitement connus de l'état de la technique quant à leur composition et leur méthode de dépôt. Ils ne sont donc pas décrits en détail dans le cadre de la présente invention.

Un avantage de l'invention est de permettre l'utilisation d'un empilement 3002 de couches « contrôle solaire », c'est-à-dire comprenant au moins une couche fonctionnelle métallique, plus résistif que ceux utilisés dans les vitrages de l'état de la technique. En ce sens, dans des modes avantageux de réalisation de l'invention, l'empilement de couches peut présenter une résistance de surface d'au moins 0,5 Ohms, en particulier d'au moins 0,7 Ohms.

Conformément à l'invention, le treillis métallique maillé est superposé à l'empilement de manière à ce que, dans la portion 3004a de l'empilement disposée selon le motif périodique, le maillage dudit treillis 3003 ne recouvre pas les zones 3005 dudit motif périodique dépourvues d'empilement. Cette superposition peut être réalisée selon plusieurs modes, dont trois d'entre eux sont illustrées sur les figures 7 à 9.

Sur les figures 7 à 9, l'empilement 3002 est disposé selon un motif périodique fermé formé de rectangles ou carrés de dimensions identiques, périodiquement espacés, et dont les bords périphériques forment des zones 3005 dépourvues d'empilement. Dans le cadre de l'invention, ce motif périodique a une fonction purement illustrative. Il sert de support explicatif aux différents modes de réalisation, décrits ci-après, quant à la superposition du treillis métallique 3003 sur l'empilement 3002. Il n'a donc aucun caractère limitatif, et tout autre motif périodique adapté à obtenir une surface sélective en fréquence selon les applications recherchées peut convenir.

Selon un premier mode de réalisation, illustré sur la [Fig.7], le maillage du treillis 3003 métallique maillé est spatialement aligné au motif périodique de la portion 3004a de l'empilement 3002 de couches selon au moins une direction caractéristique A dudit motif périodique. Sur la figure, le treillis 3003 recouvre l'empilement 3002 sur toute la largeur de l'espace entre les motifs. Le taux de recouvrement peut être plus faible.

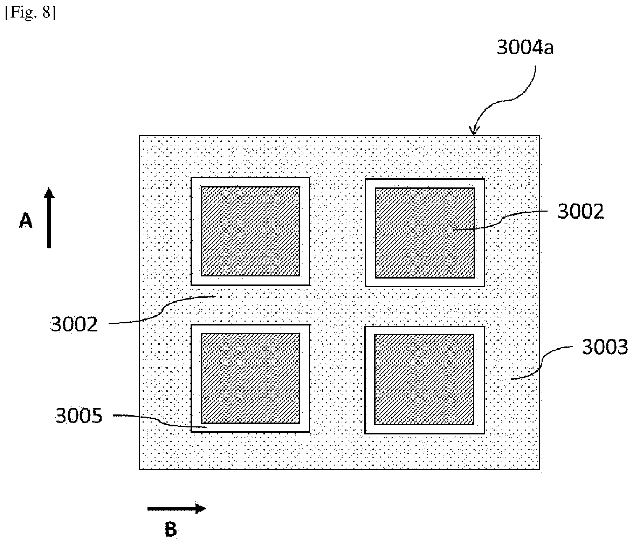

Selo un deuxième mode de réalisation, illustré sur la [Fig.8], le maillage du treillis 3003 métallique maillé est spatialement aligné au motif périodique de la portion 3004a de l'empilement 3002 de couches selon au moins deux directions caractéristiques A, B dudit motif périodique. Sur la figure, le treillis 3003 recouvre l'empilement 3002 sur toute la largeur de l'espace entre les motifs dans les deux directions caractéristiques. Le taux de recouvrement peut être plus faible.

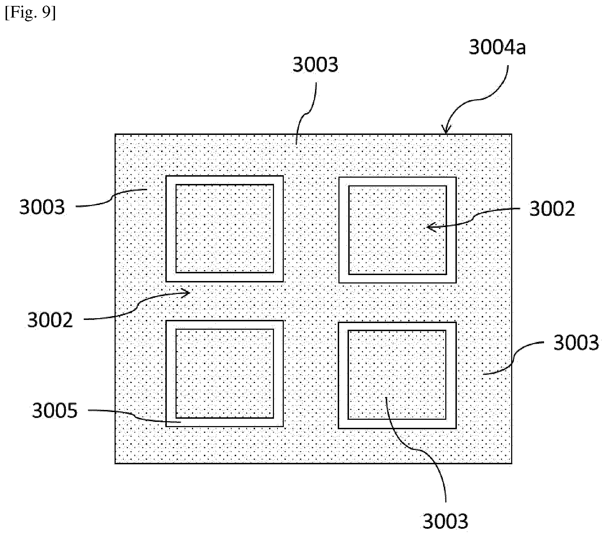

Selon un troisième mode de réalisation, illustré sur la [Fig.9], le maillage du treillis 3003 métallique maillé recouvre entièrement la portion 3004a de l'empilement 3002 de couches de manière à former la même surface sélective en fréquence. Sur la figure, l'empilement 3002 est complètement recouvert par le treillis 3003 et n'est donc pas visible. Ce mode de réalisation est particulièrement avantageux en ce que, hormis dans les portions isolées par les zones 3005 dépourvues d'empilement, le transfert de chaleur entre le treillis métallique maillé et l'empilement s'effectue sur toute la surface de l'empilement. La fonction de désembuage et/ou de dégivrage est améliorée. La visibilité du motif est également réduite grâce à une diminution du contraste éventuelle entre l'empilement et le treillis métallique maillé.

Comme souligné précédemment, le motif périodique n'a aucun caractère limitatif dans les modes de réalisation décrits, et tout motif périodique adapté peut être utilisé. En particulier, le motif périodique peut être un motif fermé ou un motif ouvert.

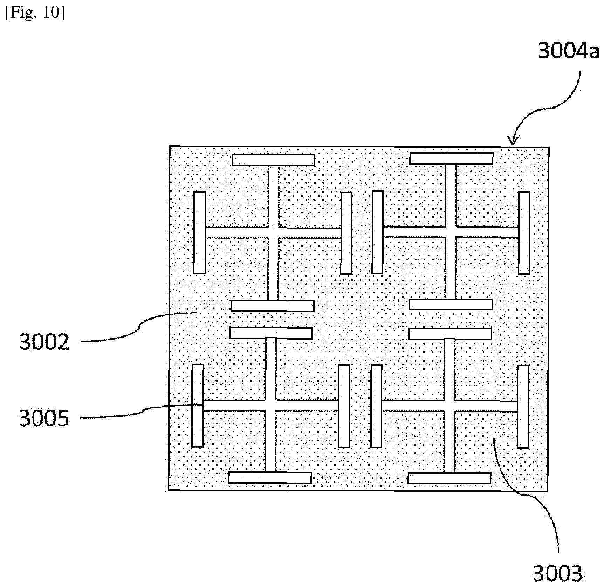

Selon une variante avantageuse du troisième mode de réalisation précédent, illustré sur la [Fig.10], le motif périodique est un motif ouvert de manière à ce que la conduction électrique soit continue dans tout l'empilement 3002 de couches et dans tout le treillis 3003 métallique maillé. Sur la figure, le motifs périodique est illustré sous la forme de croix de Jérusalem. Le treillis métallique 3003 recouvre totalement l'empilement 3002 qui n'est alors pas visible.

Contrairement au motif périodique précédent formé de rectangles ou de carrés, la structure ouverte du motif périodique illustré sur la [Fig. 10], permet une conduction électrique dans tout l'empilement 3002 de couches et dans tout le treillis 3002 métallique maillé. L'empilement 3002 de couches et le treillis métallique maillé ne présente aucune portion isolée par les zones 3005 dépourvues d'empilement. La conductivité entre les éléments du motif périodique, c'est-à-dire les croix de Jérusalem, est alors améliorée.

D'une part, la quantité de courant électrique susceptible de circuler entre ces éléments augmente, et la quantité de chaleur dégagée par effet Joule devient plus importante. D'autre part, le transfert de chaleur entre le treillis 3003 métallique maillé et l'empilement 3002 s'effectue sur la totalité la surface dudit l'empilement 3002. Le chauffage, et ainsi le désembuage et/ou le dégivrage, est plus homogène sur la surface du vitrage.

Dans tous les modes de réalisations décrits, notamment dans ceux illustrés sur les figures 3 à 10, dans la portion 3004b de l'empilement 3002 de couches qui n'est pas disposé selon un motif périodique, le treillis 3003 métallique maillé peut être superposé à l'empilement sans contrainte particulière quant à la manière et/ou au taux de recouvrement de l'empilement 3002 de couches. Il peut recouvrir partiellement ou totalement l'empilement de couches. Notamment, il peut être superposé de la même manière que celles utilisée de la portion 3004a de l'empilement 3002 de couches disposé selon un motif périodique. L'avantage est une simplification de l'assemblage et/ou de la fabrication du vitrage puisqu'un treillis 3003 métallique maillé uniforme est superposé sur l'empilement de couches dans et en-dehors de la portion 3004a de portion 3004a de l'empilement 3002 de couches disposé selon un motif périodique.

La conduction électrique, et donc l'émission de chaleur pour la fonction de chauffage, est majoritairement assurée par le treillis métallique maillé. L'alimentation électrique du treillis 3003 peut être assurée de plusieurs façons. Par exemple, elle peut être assurée par un ou plusieurs jeux de barres conductrices électriques, notamment placées en périphérie du vitrage, et sur lesquelles le treillis est électriquement connecté.

Conformément à l'invention, le treillis 3003 métallique maillé est un conducteur électrique avec une résistivité électrique de surface plus faible que celle de l'empilement 3002 de couches. Une résistivité électrique de surface électrique faible permet afin générer par effet Joule une quantité de chaleur suffisante à partir de faibles tensions électriques d'alimentation, en particulier à partir des faibles tensions des alternateurs et/ou les batteries de véhicules, pour un désembuage et/ou un dégivrage efficace du vitrage. A titre d'exemple, dans la plupart des applications dans les domaines des véhicules de transport et du bâtiment, dans lesquelles de faibles tensions électriques d'alimentation sont utilisées, elle peut être de préférence d'au plus 0,2 Ohms, en particulier d'au plus 0,1 Ohms.

Le treillis 3003 métallique maillé conducteur électrique est à base de tout type de métal adapté à sa fonction, le chauffage par effet Joule, et son application, l'incorporation dans un vitrage comprenant un empilement de couches « contrôle solaire ». Selon des modes préférés de réalisation, le treillis 3003 métallique maillé est à base d'argent. L'argent est un métal très utilisé dans le domaine des empilements de couches « contrôle solaire ». Il est un excellent conducteur électrique et est chimiquement compatible avec la majorité des empilements.

Selon des modes préférés de réalisation, le treillis 3003 métallique maillé est un treillis mince, en particulier sous forme de fils métalliques plats. La visibilité du treillis 3003 peut ainsi être réduite au maximum. Il peut également être davantage adapté aux modes de réalisations de l'invention sou forme de vitrage feuilletés, notamment dans les modes dans lesquels le treillis métallique maillé est disposée entre les feuilles de verre minéral transparent et l'intercalaire de feuilletage. Avantageusement, son épaisseur est d'au plus 5µm, en particulier d'au plus 2µm, d'au plus 1µm. De telles épaisseurs sont généralement compatibles avec les modes de réalisations de l'invention sous forme de vitrages feuilletés.

Le treillis 3003 métallique maillé peut être superposé à l'empilement 3002 de couches à l'aide de tout type de méthodes et moyens de dépôts adaptés selon la surface sur laquelle il est déposé.

Un premier exemple de méthodes de dépôt sont les méthodes d'impression numérique sans contact telle que les méthodes d'impression par jet d'encre. Elles sont adaptées aux contraintes géométriques des motifs périodiques utilisées pour former des surfaces sélectives en fréquence sur les empilements de couches.

Un deuxième exemple de méthode de dépôt sont les méthodes photolithographiques. Elles permettent des dépôts d'une très grande précision géométrique, et d'une grande résolution spatiale, et sont donc adaptées aux motifs périodiques requérant une très grande précision lors de la superposition du treillis 3003 métallique maillé sur l'empilement 3002 de couches. Ces méthodes sont parfaitement connues de l'état de la technique.

Dans certains modes de réalisation, lorsque le treillis 3003 métallique maillée est superposé à l'empilement 3002 de couches de manière à ce qu'il en soit en contact avec ledit empilement, il est avantageux qu'une couche protectrice sacrificielle soit déposée au-dessus et en contact de l'empilement avant le dépôt dudit treillis à l'aide d'une méthode photolithographique. Cette couche protectrice sacrificielle permet de protéger l'empilement lors des opérations d'insolation et de dissolution de la ou des photorésines. Un exemple de couche protectrice sacrificielle est une couche mince à base de SiO₂.

Le vitrage selon l'invention est particulièrement adapté pour une utilisation dans un véhicule de transport routier, ferroviaire ou aérien. Dans les véhicule de transport routier, tel qu'automobile ou camion, il peut être avantageusement utilisé comme parebrise ou toit vitré.

### Exemple

Dans un exemple illustratif de vitrage conformément à l'invention, le vitrage comprend :
- une feuille de verre minéral silico-sodo-calcique transparent ;
- un empilement de couches minces comprenant quatre couches fonctionnelles métalliques ;
- un treillis métallique maillé conducteur électrique à base d'argent.

Le vitrage est assemblé selon le mode de réalisation illustré sur la [Fig.3]. Le motif périodique et la superposition du treillis correspondent au mode de réalisation illustré sur la [Fig.7].

L'empilement de couches comprenant quatre couches fonctionnelles métalliques à base d'argent est déposé sur une surface principale de la feuille de verre par une méthode de pulvérisation cathodique assistée par un champ magnétique (procédé magnétron). Ce type de méthode est connue de l'état de la technique.

La composition et l'épaisseur des différentes couches correspondent à ceux de l'empilement du contre-exemple du Tableau 1 de la demande WO 2020/094422 A1. La résistivité électrique de surface de l'empilement, mesurée à l'aide d'une méthode de mesure quatre pointes ou une méthode de Van der Pauw, est de 0,7 Ω/□.

Dans une portion de l'empilement, l'empilement est retiré selon un motif périodique fermé formé de carrés à l'aide d'une méthode d'ablation par faisceau laser impulsionnel, de manière à former une surface sélective en fréquence. La largeur des carrés du motif périodique est de 23 mm, et leur espacement est de 6 mm.

Le treillis métallique maillé à base d'argent est superposé à l'empilement. Les fils formant le maillage du treillis sont des fils plats d'une largeur de 10µm et une épaisseur de 4µm. L'espacement entre les mailles est de 300µm. Le treillis est en contact l'empilement de manière à être spatialement aligné au motif périodique selon au moins une direction caractéristique dudit motif périodique, tel qu'illustré sur la [Fig.7].

Le treillis est réalisé à l'aide d'une méthode photolithographique selon le protocole suivant :
- dépôt d'une couche de titane métallique d'une épaisseur de 5nm par une méthode de pulvérisation cathodique radiofréquence ;
- dépôt d'une couche d'argent métallique d'une épaisseur de 4µm par une méthode de pulvérisation cathodique radiofréquence ;
- dépôt d'une couche de résine photosensible ;
- application d'un masque en polyester (« Mylar ^{®} ») reproduisant le maillage du treillis métallique
- insolation de la résine photosensible sous rayonnement ultra-violet à;
- retrait du masque ;
- développement de la résine exposée à l'aide d'une solution de développement adaptée ;
- attaque acide par voie humide à l'aide d'une solution acide adaptée, par exemple une solution acide à base d'acide nitrique, d'acide phosphorique et d'acide acétique, de manière à éliminer les couches de titane et d'argent dans les zones développées ;
- dissolution de la résine résiduelle à l'aide d'une solution d'acétone.

La résistivité électrique de surface du treillis, mesurée à l'aide d'une méthode de mesure quatre pointes ou une méthode de Van der Pauw, du treillis est de 0,1 Ω/□.

Un contre-exemple est réalisé identique à l'exemple illustratif sauf qu'il ne comprend pas de treillis métallique maillé.

La transmission des radiofréquences dans la portion de l'empilement de couches disposée selon le motif périodique est simulé dans l'intervalle 1-2 GHz à l'aide du logiciel CST MICROWAVE STUDIO développé par le société CST- Computer Simulation Technology.

Dans l'exemple et le contre-exemple, l'atténuation du signal sur l'intervalle 1-2 GHz est d'au maximum -16dB avec une minimum d'atténuation d'environ -6Hz centré à 1,5 GHz.

Pour l'exemple, dans la portion de l'empilement disposée selon le motif périodique, la résistance électrique est d'environ 0,5Q, pour une puissance électrique théorique à 12 V d'environ 288W. Dans le contre-exemple, la résistance électrique est d'environ 2,7 Ω, pour une puissance théorique à 12 V d'environ 53 W.

Cet exemple montre qu'un vitrage conformément à l'invention permet d'obtenir la quantité de chaleur dégagée par effet Joule à partir de faibles tensions électriques d'alimentation plus importante que celle des vitrages de l'état de la technique.

Corrélativement, il démontre la possibilité d'utiliser des empilements « contrôle solaire », plus résistif que ceux utilisés dans les vitrages de l'état de la technique.

## Revendications

1. Vitrage (3000, 4000, 5000, 6000) comprenant :
- une feuille (3001) de verre minéral transparent comprenant au moins une surface (3001a) principale ;
- un empilement (3002) de couches superposé à ladite surface (3001a) principale de ladite feuille (3001) de verre minéral transparent, ledit empilement (3002) de couches comprenant au moins une couche fonctionnelle métallique, et au moins une portion (3004a) dudit empilement (3002) de couches étant disposée selon un motif périodique de manière à former une surface sélective en fréquence ;
le vitrage (3000, 4000, 5000, 6000) est **caractérisé en ce qu'**il comprend en outre :
- un treillis (3003) métallique maillé conducteur électrique avec une résistivité électrique de surface plus faible que celle de l'empilement (3002) de couches,
- ledit treillis (3003) étant superposé audit empilement (3002) de couches de manière à ce que, dans la portion (3004a) de l'empilement disposée selon le motif périodique, le maillage dudit treillis (3003) ne recouvre pas les zones (3005) dudit motif périodique dépourvues de l'empilement (3002) de couches.

2. Vitrage (3000) selon la revendication 1, tel que le treillis (3003) métallique maillé est disposé au contact de l'empilement (3002) de couches.

3. Vitrage (4000) selon la revendication 1, tel que le treillis (3003) métallique maillé est disposé sur une surface (3001b) principale de la feuille (3001) de verre minéral transparent opposée à la surface (3001a) principale sur laquelle est disposé l'empilement (3002) de couches.

4. Vitrage (5000, 6000) selon la revendication 1, tel que ledit vitrage comprend en outre :
- une deuxième feuille (5001) de verre minéral transparent comprenant au moins une surface (5001a) principale et,
- un intercalaire (5002) de feuilletage comprenant une première surface (5002a) principale et une deuxième surface (5002b) principale, lesdites première et deuxième surface principales (5002a, 5002b) de l'intercalaire (5002) de feuilletage étant respectivement en contact adhésif avec la surface (5001a) principale de la deuxième feuille (5001) de verre minéral transparent et la surface (3001a) principale de la première feuille (3001) de verre minéral transparent sur laquelle est disposé l'empilement (3002) de couches,
et tel que le treillis (3003) métallique maillé est disposé sur l'une des deux surfaces (5002a, 5002b) principales de l'intercalaire (5002) de feuilletage.

5. Vitrage (3000, 4000, 5000, 6000) selon l'une quelconque des revendications 1 à 4, tel que le maillage du treillis (3003) métallique maillé est spatialement aligné au motif périodique de ladite portion (3004a) selon au moins une direction (A) caractéristique dudit motif périodique, en particulier au moins deux directions (A, B) caractéristiques du motif périodique.

6. Vitrage (3000, 4000, 5000, 6000) selon l'une quelconque des revendications 1 à 5, tel que le maillage du treillis (3003) métallique maillé recouvre entièrement la portion (3004a) de l'empilement (3002) de couches selon le même motif périodique, de manière à former la même surface sélective en fréquence.

7. Vitrage (3000, 4000, 5000, 6000) selon la revendication 6, tel que le motif périodique est un motif ouvert de manière à ce que la conduction électrique soit continue dans tout l'empilement (3002) de couches et dans tout le treillis (3003) métallique maillé.

8. Vitrage (3000, 4000, 5000, 6000) selon l'une quelconque des revendications 1 à 7, tel que la surface sélective en fréquence forme un filtre passe-bande en radiofréquences, en particulier un filtre passe-bande en radiofréquences dont la borne inférieure de l'intervalle est supérieure à 0 et la borne supérieure de l'intervalle est d'au moins 3 GHz, en particulier d'au moins 5 GHz.

9. Vitrage ((3000, 4000, 5000, 6000) selon l'une quelconque des revendications 1 à 8, tel que la résistance électrique de surface du treillis métallique maillé est d'au plus 0,2 Ohms, en particulier d'au plus 0,1 Ohms.

10. Vitrage ((3000, 4000, 5000, 6000) selon l'une quelconque des revendications 1 à 9, tel que le treillis 3003 métallique maillé est à base d'argent.

11. Vitrage (3000, 4000, 5000, 6000) selon l'une quelconque des revendications 1 à 10, tel que l'épaisseur du treillis métallique maillé est d'au plus 5µm, en particulier d'au plus 2µm, de préférence d'au plus 1µm.

12. Vitrage (3000, 4000, 5000, 6000) selon l'une quelconque des revendications 1 à 11, tel que l'empilement de couches présente une résistance de surface d'au moins 0,5 Ohms, en particulier d'au moins 0,7 Ohms.

13. Vitrage selon l'une quelconque des revendications 1 à 12, tel que l'empilement de couches comprend au moins deux, en particulier au moins trois couches fonctionnelles métalliques, séparées entre elles par au moins un ensemble diélectrique de couches.

14. Utilisation d'un vitrage (3000, 4000, 5000, 6000) selon l'une des quelconques des revendications 1 à 13 dans un véhicule de transport routier, ferroviaire ou aérien.

## Patentansprüche

1. Verglasung (3000, 4000, 5000, 6000) umfassend:
- eine Scheibe (3001) aus transparentem Mineralglas, umfassend mindestens eine Hauptoberfläche (3001a);
- eine Stapelung (3002) von Schichten, die auf der Hauptoberfläche (3001a) der Scheibe (3001) aus transparentem Mineralglas überlagert ist, die Stapelung (3002) von Schichten umfassend mindestens eine metallische Funktionsschicht, und wobei mindestens ein Abschnitt (3004a) der Stapelung (3002) von Schichten gemäß einem periodischen Muster angeordnet ist, um eine frequenzselektive Oberfläche auszubilden;
wobei die Verglasung (3000, 4000, 5000, 6000)
**dadurch gekennzeichnet ist, dass** sie ferner umfasst:
- ein elektrisch leitendes vermaschtes Drahtgeflecht (3003) mit einem elektrischen Oberflächenwiderstand, der niedriger als der der Stapelung (3002) von Schichten ist,
- wobei das Geflecht (3003) der Stapelung (3002) von Schichten so überlagert ist, dass in dem Abschnitt (3004a) der Stapelung, der gemäß dem periodischen Muster angeordnet ist, die Maschen des Geflechts (3003) die Zonen (3005) des periodischen Musters ohne die Stapelung (3002) von Schichten nicht bedecken.

2. Verglasung (3000) nach Anspruch 1, wobei das vermaschte Drahtgeflecht (3003) in Kontakt mit der Stapelung (3002) von Schichten angeordnet ist.

3. Verglasung (4000) nach Anspruch 1, derart, wobei das vermaschte Drahtgeflecht (3003) auf einer Hauptoberfläche (3001b) der Scheibe (3001) aus transparentem Mineralglas angeordnet ist, die der Hauptoberfläche (3001a) gegenüberliegt, auf der die Stapelung (3002) von Schichten angeordnet ist.

4. Verglasung (5000, 6000) nach Anspruch 1, wobei die Verglasung ferner umfasst:
- eine zweite Scheibe (5001) aus transparentem Mineralglas, umfassend mindestens eine Hauptoberfläche (5001a), und
- eine Verbundzwischenlage (5002), umfassend eine erste Hauptoberfläche (5002a) und eine zweite Hauptoberfläche (5002b), wobei die erste und die zweite Hauptoberfläche (5002a, 5002b) der Verbundzwischenlage (5002) jeweils in Klebekontakt mit der Hauptoberfläche (5001a) der zweiten Scheibe (5001) aus transparentem Mineralglas und der Hauptoberfläche (3001a) der ersten Scheibe (3001) aus transparentem Mineralglas stehen, auf der die Stapelung (3002) von Schichten angeordnet ist,
und wobei das vermaschte Drahtgeflecht (3003) auf einer der zwei Hauptoberflächen (5002a, 5002b) der Verbundzwischenlage (5002) angeordnet ist.

5. Verglasung (3000, 4000, 5000, 6000) nach einem der Ansprüche 1 bis 4, wobei die Maschen des vermaschten Drahtgeflechts (3003) auf das periodische Muster des Abschnitts (3004a) entlang mindestens einer Richtung (A) räumlich ausgerichtet sind, die für das periodische Muster kennzeichnend ist, insbesondere mindestens zwei Richtungen (A, B), die für das periodische Muster kennzeichnend sind.

6. Verglasung (3000, 4000, 5000, 6000) nach einem der Ansprüche 1 bis 5, wobei die Maschen des vermaschten Drahtgeflechts (3003) den Abschnitt (3004a) der Stapelung (3002) von Schichten gemäß dem gleichen periodischen Muster vollständig bedecken, um so die gleiche frequenzselektive Oberfläche auszubilden.

7. Verglasung (3000, 4000, 5000, 6000) nach Anspruch 6, wobei das periodische Muster ein offenes Muster ist, sodass die elektrische Leitung in der gesamten Stapelung (3002) von Schichten und in dem gesamten vermaschten Drahtgeflecht (3003) kontinuierlich ist.

8. Verglasung (3000, 4000, 5000, 6000) nach einem der Ansprüche 1 bis 7, wobei die frequenzselektive Oberfläche ein Hochfrequenzbandpassfilter ausbildet, insbesondere ein Hochfrequenzbandpassfilter, dessen untere Grenze des Intervalls größer als 0 ist und dessen obere Grenze des Intervalls mindestens 3 GHz, insbesondere mindestens 5 GHz beträgt.

9. Verglasung (3000, 4000, 5000, 6000) nach einem der Ansprüche 1 bis 8, wobei der elektrische Oberflächenwiderstand des vermaschten Drahtgeflechts höchstens 0,2 Ohm, insbesondere höchstens 0,1 Ohm beträgt.

10. Verglasung (3000, 4000, 5000, 6000) nach einem der Ansprüche 1 bis 9, wobei das vermaschte Drahtgeflecht 3003 auf Silber basiert.

11. Verglasung (3000, 4000, 5000, 6000) nach einem der Ansprüche 1 bis 10, wobei die Dicke des vermaschten Drahtgeflechts höchstens 5 µm, insbesondere höchstens 2 µm, vorzugsweise höchstens 1 µm beträgt.

12. Verglasung (3000, 4000, 5000, 6000) nach einem der Ansprüche 1 bis 11, wobei die Stapelung von Schichten einen Oberflächenwiderstand von mindestens 0,5 Ohm, insbesondere von mindestens 0,7 Ohm aufweist.

13. Verglasung nach einem der Ansprüche 1 bis 12, wobei die Stapelung von Schichten mindestens zwei, insbesondere mindestens drei vermaschte Funktionsschichten umfasst, die durch mindestens eine dielektrische Baugruppe von Schichten voneinander getrennt sind.

14. Verwendung einer Verglasung (3000, 4000, 5000, 6000) nach einem der Ansprüche 1 bis 13 in einem Straßen-, Schienen- oder Lufttransportfahrzeug.

## Claims

1. A glazing (3000, 4000, 5000, 6000) comprising:
- a transparent mineral glass sheet (3001) comprising at least one main surface (3001a);
- a stack (3002) of layers superimposed on said main surface (3001a) of said transparent mineral glass sheet (3001), said stack (3002) of layers comprising at least one metallic functional layer, and at least one portion (3004a) of said stack (3002) of layers being arranged in a periodic pattern so as to form a frequency-selective surface;
the glazing (3000, 4000, 5000, 6000) is **characterized in that** it further comprises:
- an electrically-conductive meshed metallic lattice (3003) with an electrical resistivity of lower surface than that of the stack (3002) of layers,
- said lattice (3003) being superimposed on said stack (3002) of layers so that, in the portion (3004a) of the stack arranged according to the periodic pattern, the mesh of said lattice (3003) does not cover the zones (3005) of said periodic pattern without the stack (3002) of layers.

2. The glazing (3000) according to claim 1, such that the meshed metallic lattice (3003) is arranged in contact with the stack (3002) of layers.

3. The glazing (4000) according to claim 1, such that the meshed metallic lattice (3003) is arranged on a main surface (3001b) of the transparent sheet (3001) of mineral glass opposite the main surface (3001a) on which the stack (3002) of layers is arranged.

4. The glazing (5000, 6000) according to claim 1, such that said glazing further comprises:
- a second transparent mineral glass sheet (5001) comprising at least one main surface (5001a) and,
- a lamination interlayer (5002) comprising a first main surface (5002a) and a main second surface (5002b), said first and second main surfaces (5002a, 5002b) of the lamination interlayer (5002) respectively being in adhesive contact with the main surface (5001a) of the second sheet (5001) of transparent mineral glass and the main surface (3001a) of the first transparent mineral glass sheet (3001) on which the stack (3002) of layers is placed,
and such that the meshed metallic lattice (3003) is arranged on one of the two main surfaces (5002a, 5002b) of the lamination interlayer (5002).

5. The glazing (3000, 4000, 5000, 6000) according to any one of claims 1 to 4, such that the mesh of the meshed metallic lattice (3003) is spatially aligned with the periodic pattern of said portion (3004a) in at least one direction (A) characteristic of said periodic pattern, in particular at least two directions (A, B) characteristic of the periodic pattern.

6. The glazing (3000, 4000, 5000, 6000) according to any one of claims 1 to 5, such that the mesh of the meshed metallic lattice (3003) entirely covers the portion (3004a) of the stack (3002) of layers according to the same periodic pattern, so as to form the same frequency-selective surface.

7. The glazing (3000, 4000, 5000, 6000) according to claim 6, such that the periodic pattern is an open pattern so that the electrical conduction is continuous throughout the stack (3002) of layers and throughout the meshed metallic lattice (3003).

8. The glazing (3000, 4000, 5000, 6000) according to any one of claims 1 to 7, such that the frequency-selective surface forms a radiofrequency bandpass filter, in particular a radiofrequency bandpass filter, the lower bound of the interval of which is greater than 0 and the upper bound of the interval is at least 3 GHz, in particular at least 5 GHz.

9. The glazing (3000, 4000, 5000, 6000) according to any one of claims 1 to 8, such that the electrical surface resistance of the meshed metallic lattice is at most 0.2 Ohms, in particular at most 0.1 Ohms.

10. The glazing (3000, 4000, 5000, 6000) according to any one of claims 1 to 9, such that the meshed metallic lattice 3003 is silver-based.

11. The glazing (3000, 4000, 5000, 6000) according to any one of claims 1 to 10, such that the thickness of the meshed metallic lattice is at most 5 µm, in particular of at most 2 µm, preferably of at most 1 µm.

12. The glazing (3000, 4000, 5000, 6000) according to any one of claims 1 to 11, such that the stack of layers has a surface resistance of at least 0.5 Ohms, in particular of at least 0.7 Ohms.

13. The glazing according to any one of claims 1 to 12, such that the stack of layers comprises at least two, in particular at least three functional metallic layers, separated from one another by at least one dielectric layer assembly.

14. Use of a glazing (3000, 4000, 5000, 6000) according to any of claims 1 to 13 in a road, rail, or air transport vehicle.
